# EUROPÄISCHE PATENTSCHRIFT

(11) **EP 1 554 818 B1**
(45) Veröffentlichungstag und Bekanntmachung des Hinweises auf die Patenterteilung: **16.04.2008**
(21) Anmeldenummer: 03785612.7
(22) Anmeldetag: 09.10.2003
(51) Int. Cl.: H04B 7/005, H04L 12/56

(54) **VERFAHREN ZUR STEUERUNG DER DATENÜBERTRAGUNG IN FUNKNETZWERKEN**
Method for controlling data transmission in wireless networks
Procédé pour comander une transmission de données dans des réseaux radios

(30) Priorität: 11.10.2002 DE 10247581
(43) Veröffentlichungstag der Anmeldung: 20.07.2005
(73) Patentinhaber: fg microtec GmbH, 81829 München (DE)
(72) Erfinder: KELZ, Thomas, 16767 Germendorf (DE)
(74) Vertreter: Köllner, Malte
(86) Internationale Anmeldenummer: PCT/EP2003/011198
(87) Internationale Veröffentlichungsnummer: WO 2004/036931

(56) Entgegenhaltungen:
- WO-A-99/26423
- US-A1- 2002 080 719
- BOUJEMAA H ET AL: "Prediction of the received power for the UMTS closed loop power control" 15. September 2002 (2002-09-15), , PAGE(S) 1621-1625 , XP010611540 Seite 1621, linke Spalte, Zeilen 4-6 Seite 1621, linke Spalte, Zeile 8 Seite 1621, rechte Spalte, Zeile 2 Seite 1621, rechte Spalte, Zeile 8 - Zeile 9 Seite 1622, linke Spalte, Zeile 10
- TANNER R ET AL: "A COMPARISON OF CHANNEL STATE PREDICTION TECHIQUES" WIRELESS. INTERNATIONAL CONFERENCE ON WIRELESS COMMUNICATIONS, XX, XX, Bd. 1, 8. Juli 2002 (2002-07-08), Seiten 312-317, XP009032079

## Beschreibung

Die Erfindung betrifft ein Verfahren zur Vorhersage der Qualität einer Funkverbindung. Die Erfindung betrifft insbesondere ein Verfahren zur Vorhersage von Qualitätsschwankungen bei UMTS- und GRPS-Verbindungen. Hierbei wird Rücksicht genommen auf bekannte gemessene Werte und auf Reaktionen der Basisstation.

### Gebiet der Erfindung:

Zur Verbesserung der Übertragungsraten ist es von Vorteil, zu wissen, wie sich die Qualität im Laufe der Übertragungszeit entwickeln wird. Für mobile Endgeräte ist dies von sehr großem Interesse, da auf Grund der Bewegungen große Qualitätsschwankungen auftreten können. In Abhängigkeit der Vorhersagen kann dann entschieden werden, ob die Übertragung beschleunigt werden soll, bevor sich die Qualität verschlechtert, oder ob momentan weniger übertragen werden soll, damit im Falle einer besseren Qualität die Übertragungsleistung zu einem späteren Zeitpunkt beschleunigt werden kann.

### Stand der Technik (SdT):

Aus [1] ist ein Verfahren bekannt, das die Qualität der Verbindung, insbesondere des Uplinks, bestimmt bzw. vorhersagt. Aus dem Standard 3GPP (3GPP TS 25.331) [2] ist ein Verfahren bekannt, mit dem die Qualität des Downlinks bestimmt werden kann.

Die US 6,029,057 beschreibt ein Verfahren zur Auswahl einer von mehreren Antennen für den besseren Empfang in einem mobilen Empfänger. Dazu wird die Qualität einer Funkverbindung gemessen und für einen relevanten Zeitraum in der unmittelbaren Zukunft vorhergesagt. Die Auswahl der Antennen erfolgt nicht auf der Basis der aktuellen Qualität der Funkverbindung, sondern auf der Basis der vorhergesagten Qualität der Funkverbindung.

Die US 5,886,988 sowie WO 98/30047 beschreiben ein Verfahren zur Auswahl von räumlichen Kanälen für die Übertragung von Daten per Funk von einer Basisstation an mobile Endgeräte (sog. SDMA, spatial division multiplexing). Dazu wird ebenfalls die Qualität einer Funkverbindung gemessen und für einen relevanten Zeitraum in der unmittelbaren Zukunft vorhergesagt. Die Auswahl des räumlichen Kanals erfolgt nicht auf der Basis der aktuellen Qualität der Funkverbindung, sondern auf der Basis der vorhergesagten Qualität der Funkverbindung.

Das Dokument "Prediction of the received power for UMTS closed loop power control", veröffentlicht in The 13th IEEE International Symposium on Personal, Indoor and Mobile Communications, 2002, offenbart ein Verfahren zur Vorhersage der empfangenen Leistung unter Berücksichtigung der Sendeleistung und von gesendeten TPC-Kommandos.

### Aufgabe der Erfindung:

Die Erfindung soll auf Grund einer Vorhersage der Qualität die Übertragungsleistung verbessern. Jeweils werden Werte berücksichtigt, die einfach zu bestimmen sind und die in einer Korrelation zueinander stehen.

### Detaillierte Beschreibung der Erfindung:

Gelöst wird diese Aufgabe durch eine Vorrichtung und ein Verfahren mit den Merkmalen der unabhängigen Ansprüche. Weitere Ausführungsformen sind den Unteransprüchen zu entnehmen.

Im Allgemeinen handelt es sich um ein Verfahren zur Vorhersage der Qualität einer Funkverbindung, insbesondere von UMTS-Funkverbindungen, bei dem mindestens ein Qualitätswert der Funkverbindung gemessen wird und bei dem Kommandos zur Kontrolle der Funkverbindung analysiert werden, wobei die Kommandos in Relation zu den Qualitätswerten stehen. Der Qualitätswert misst oder bestimmt in der bevorzugten Ausführungsform die Qualität des Uplinks oder des Downlinks.

Die so bestimmten Werte werden dann einem Algorithmus übergeben, der Aussagen über die Zukunft treffen kann. Bei diesem Algorithmus handelt es sich vorzugsweise um einen mehrdimensionalen stochastischen Algorithmus, der insbesondere Covarianz-Matrizen umfasst. Andere Algorithmen können neuronale Netze, genetische Algorithmen und/oder simulated annealing verwenden. Auf der Basis der Vorhersagen der Algorithmen werden dann Übertragungsparameter angepasst, insbesondere die Übertragungsleistung, die Blockgröße, der Codec, die Header Compression Methode oder die Übertragungsverzögerung.

In der bevorzugten Ausführungsform werden TPC-Kommandos gemessen, die die Sendestärke anpassen. Die Basisstation sendet ca. 1.500 Kommandos pro Sekunde. Ziel dieser Kommandos ist es, den SIR anzupassen, indem entweder die Sendeleistung (TX Power) des Endgerätes gesteigert oder gesenkt wird. In der bevorzugten Ausführungsform werden 30 TPC-Message-Blocks zusammengefasst (TTI von 20 ms), die durch Δ TPC und PCA (Power Control Algorithm) normalisiert werden, wobei die Werte gewichtet werden und vorzugsweise statistisch ausgewertet werden. Durch diese Auswertung ist eine kurzfristige Änderung erkennbar.

Die TPC-Kommandos haben einen Einfluss auf die Qualität des Links. Anhand der Sendeleistung TX und der Empfangsleistung RX des Downlinks wird der Verlust bei der Übertragung berechnet.

In einer weiteren Ausführungsform wird die Blockfehlerrate (BLER) berücksichtigt.

Weitere Bestandteile der Erfindung sind eine elektronische Schaltung, eine Software für ein mobiles Kommunikationsgerät, ein mobiles Kommunikationsgerät, insbesondere ein mobiles Telefon oder PDA, und ein Datenträger für ein mobiles Kommunikationsgerät, insbesondere ein mobiles Telefon oder PDA.

Im Folgenden wird die Erfindung anhand eines Ausführungsbeispiels näher erläutert, das in der Figur schematisch dargestellt ist. Gleiche Bezugsziffern in den einzelnen Figuren bezeichnen dabei gleiche Elemente. Im Einzelnen zeigt:

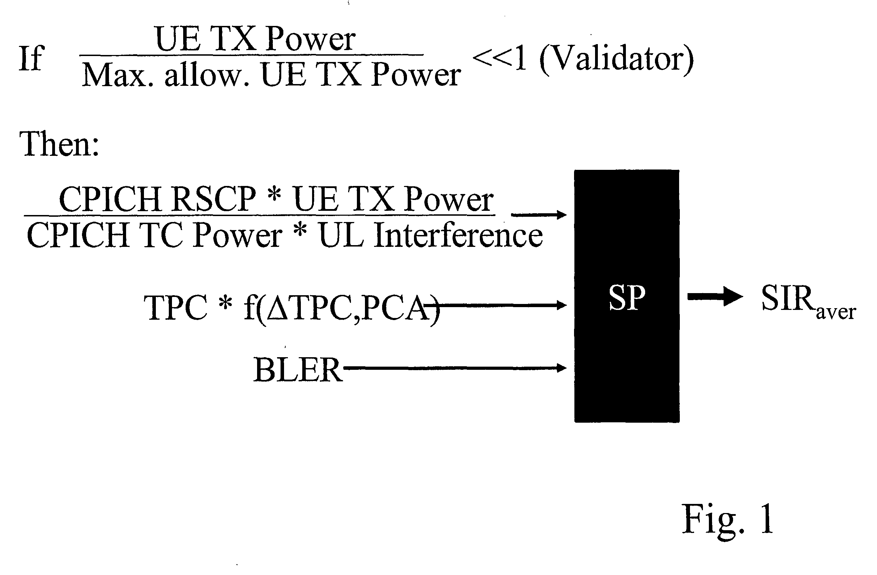

- Fig. 1: zeigt ein Blockschaltbild, bei dem in Abhängigkeit eines Ereignisses Informationen in den Algorithmus zur Vorhersage des SIR geleitet werden.

Es können folgende Downlink-Messungen vorgenommen werden. Die BLER (Block Error Rate, 3GPP TS 25.215), die CPICH RSCP (received energy per chip divided by the power density in the band, 3GPP TS 25.215) sowie die transmit power (UE TX Power, 3GPP TS 25.215) können festgestellt werden.

Weiterhin sind Informationen vom Node-B (Basisstation) gegeben, die durch den SIB (System Information Blocks) übertragen werden.

Die folgenden Uplink(UL)-Messungen sind möglich: UL Interference (Uplink Interference, 3GPP TS 25.331), DTPC (Step in db for changing transmit power, 3GPP TS 25.331), PCA (Power Control Algorithm 1 or 2, 3GPP TS 25.331), Max. allowed UL TX Power (diese wird durch den Node-B (Basisstation) dynamisch in Abhängigkeit der Zell-Belastung festgelegt, 3GPP TS 25.331), CPICH TX Power (Übertragungspower des Node-B, 3GPP TS 25.331).

Weiterhin erhält man die Power commands TPC vom Node-B (transmit power Control command, gesendet vom Node-B zur Steuerung der Sendeleistung des UE (user equipment, mobiles Endgerät), 3GPP TS 25.331).

Es wird angenommen, dass der Verlust im uplink and downlink identisch ist. Somit kann man schätzen, dass der UL-Signalstärkeverlust mit dem DL-Signalstärkeverlust korreliert. Die Sende- (TX) und Empfangsleistung (RX) sind bekannt. Den Verlust in % erhält man durch die Division von
CPICH RSCP / CPICH TX Power.

Durch Multiplikation mit der Übertragungsleistung
CPICH RSCP / CPICH TX Power * UE TX Power
erhält man den Wert: received signal strength am Node-B,
durch Division mit dem UL-Interference das Signal-zu-Interference-Verhältnis:
(CPICH RSCP / CPICH TX Power * UE TX Power) / UL-Interference

Dies ist in der bevorzugten Ausführungsform der erste Wert, der in den Algorithmus für die Vorhersage einfließt.

Die TPC-Kommandos sind der zweite Parameter. Der Node-B sendet in der Regel 1.500 TPC-Kommandos pro Sekunde. Ziel ist es, den SIR des UE durch Erhöhung oder Erniedrigung der UE TX Power anzupassen. So werden 30 TPC-Kommandoblöcke (mit. TTI von 20 ms) verwendet. Diese Blöke werden normalisiert mit DTPC und PCA, um dann statistisch gewichtet zu werden. Aus diesen Werten kann man unmittelbar die Reaktion der Knoten B auf Änderungen des SIR erkennen.

Ein dritter Wert der Aussagen über eine langsame Veränderung link Qualität ist BLER.

Ein Entscheider beobachtet
UE TX Power / max allowed UL TX Power.

Falls der Wert gegen 1 läuft, hat man Kenntnis darüber, dass die Zelle stark belastet ist oder die Bedingungen für die Funkverbindung schlecht sind. Hieraus kann erkannt werden, dass das Signal am Node-B nicht die SIR-Zielvorgabe erreicht, weil die maximal erlaubte Leistung TX genutzt wird. In diesem Falle sind Vorhersagen unter Umständen nicht sehr sinnvoll, aber man weiß, dass die Konditionen sehr schlecht sind und die Parameter, wie sie oben beschrieben wurden sind entsprechend einzustellen. Die Einstellung muss berücksichtigen, dass man die größtmögliche Sicherheit für die Pakete erreicht mit der besten FEC und den kleinsten Paketen.

### Liste der zitierten Literatur:

[1] "Simulated Annealing: Theory and Applications", P. J. Van Laarhoven, Emile H. Aarts, ISBN: 9027725136, Kluwer Academic Publishers, 1987
[2] TS 25.331: "RRC Protocol Specification"

## Patentansprüche

1. Verfahren zur Steuerung der Qualität einer Funkverbindung, insbesondere einer UMTS-Funkverbindung, wobei an der Funkverbindung ein mobiles Endgerät beteiligt ist,
a) wobei mindestens ein Qualitätswert der Funkverbindung gemessen wird;
b) wobei der mindestens eine Qualitätswert einem Algorithmus zur Vorhersage der Qualität der Funkverbindung übergeben wird;
c) wobei der Algorithmus zusätzlich Kommandos zur Kontrolle der Funkverbindung analysiert, wobei die Kommandos in Relation zu dem mindestens einen Qualitätswert stehen; **gekennzeichnet dadurch, dass**
d) der Algorithmus auf dem mobilen Endgerät durchgeführt wird;
e) auf der Basis der Vorhersagen zusätzlich zur Übertragungsleistung weitere Übertragungsparameter der Funkverbindung angepasst werden.

2. Verfahren nach dem vorhergehenden Anspruch, **dadurch gekennzeichnet, dass** die Qualität des Uplinks der Funkverbindung gesteuert wird.

3. Verfahren nach einem der vorhergehenden Ansprüche, **dadurch gekennzeichnet, dass** das mobile Endgerät die weiteren Übertragungsparameter anpasst.

4. Verfahren nach einem der vorhergehenden Ansprüche, **dadurch gekennzeichnet, dass** die Kommandos die Sendestärke anpassen, wobei es sich vorzugsweise um TPC-Kommandos handelt.

5. Verfahren nach einem der vorhergehenden Ansprüche, **dadurch gekennzeichnet, dass** die Kommandos in einem Zeitfenster ausgewertet und gewichtet werden.

6. Verfahren nach einem der vorhergehenden Ansprüche, **dadurch gekennzeichnet, dass** der Qualitätswert die Qualität des Uplinks und/oder des Downlinks misst.

7. Verfahren nach einem der vorhergehenden Ansprüche, **dadurch gekennzeichnet, dass** anhand der Sendeleistung (TX) und der Empfangsleistung (RX) des Downlinks der Verlust berechnet wird.

8. Verfahren nach einem der vorhergehenden Ansprüche, **dadurch gekennzeichnet, dass** als zusätzliche Übertragungsparameter die Blockgröße und/oder der Codec und/oder eine header compression Methode und/oder die Übertragungsverzögerung gewählt werden.

9. Verfahren nach einem der vorhergehenden Ansprüche, **dadurch gekennzeichnet, dass** es sich bei dem Algorithmus zur Vorhersage von Qualitäten um einen mehrdimensionalen stochastischen Algorithmus handelt, der insbesondere Covarianz-Matrizen, neuronale Netze, genetische Algorithmen und/oder simulated annealing verwendet.

10. Elektronische Schaltung, **gekennzeichnet durch** Mittel, die ein Verfahren nach einem der vorhergehenden Verfahrensansprüche realisieren.

11. Software für ein mobiles Kommunikationsgerät, insbesondere ein mobiles Telefon oder PDA, **dadurch gekennzeichnet, dass** ein Verfahren nach einem der vorhergehenden Verfahrensansprüche implementiert ist.

12. Datenträger für ein mobiles Kommunikationsgerät, insbesondere ein mobiles Telefon oder PDA, **gekennzeichnet durch** die Speicherung einer Software nach dem vorhergehenden Softwareanspruch.

13. Mobiles Kommunikationsgerät, **gekennzeichnet durch** eine Einrichtung, die den Ablauf eines Verfahrens nach einem der vorhergehenden Verfahrensansprüche erlaubt.

## Claims

1. A method for controlling the quality of a wireless link, in particular a UMTS wireless link, in which a mobile device is involved, comprising the following steps:
a) measuring at least one quality value of the wireless link;
b) handing the measured at least one quality value over to an algorithm for predicting the quality of the wireless link;
c) whereby the algorithm additionally analyzes commands for controlling the wireless link, whereby the commands are related to the at least one quality value, **characterized in that**
d) the algorithm is executed on the mobile device;
e) further transmission parameters of the wireless link are adapted, in addition to adapting the transmission power, on the basis of the prediction made by the algorithm.

2. The method as claimed in claim 1, **characterized in that** the method is used for controlling the quality of the uplink of the wireless link.

3. The method as claimed in any of the preceding claims. **characterized in that** the mobile device adapts the further transmission parameters.

4. The method as claimed in any of the preceding claims, **characterized in that** the commands adapt the transmission power, and are preferably TPC commands.

5. The method as claimed in any of the preceding claims, **characterized in that** the commands are evaluated and weighted in a temporal window.

6. The method as claimed in any of the preceding claims, **characterized in that** the quality value measures the quality of the uplink and/or of the downlink.

7. The method as claimed in any of the preceding claims, **characterized in that** the loss is calculated on the basis of the transmission power (TX) and the received power (RX) in the downlink.

8. The method as claimed in any of the preceding claims, **characterized in that** as further transmission parameters the block size and/or the codec and/or a header compression method and/or the transmission delay are chosen.

9. The method as claimed in any of the preceding claims, **characterized in that** the algorithm for predicting the quality of the wireless link is a multidimensional stochastic algorithm which uses, in particular, covariance matrices, neural networks, genetic algorithms and/or simulated annealing.

10. An electronic circuit, **characterized by** means which implement a method as claimed in any of the preceding method claims.

11. Software for a mobile communication device, in particular a mobile telephone or PDA, **characterized in that** a method as claimed in any of the preceding method claims is implemented.

12. A data storage medium for a mobile communication device, in particular a mobile telephone or PDA, **characterized by** the storage of software as claimed in the preceding software claim.

13. A mobile communication device, **characterized by** a device which allows a method as claimed in any of the preceding method claims to be carried out.

## Revendications

1. Procédé pour commander la qualité d'une liaison radio, notamment d'une liaison radio UMTS, un appareil terminal mobile prenant part a la liaison radio,
a) au moins une valeur de qualité de la liaison radio étant mesurée;
b) l'au moins une valeur de qualité étant transmise à un algorithme pour prévoir la qualité de la liaison radio;
c) l'algorithme analysant en outre les commandes de contrôle de la liaison radio, les commandes étant liées à l'au moins une valeur de qualité;
**caractérisé en ce que**
d) l'algorithme est réalisé sur l'appareil terminal mobile;
e) des paramètres de transmission supplémentaires de la liaison radio sont adaptés sur la base des prévisions, en plus de la performance de la transmission.

2. Procédé selon la revendication précédente, **caractérisé en ce que** la qualité de la liaison montante de la liaison radio est commandée.

3. Procédé selon l'une quelconque des revendications précédentes, **caractérisé en ce que** l'appareil terminal mobile adapte les autres paramètres de transmission.

4. Procédé selon l'une quelconque des revendications précédentes, **caractérisé en ce que** les commandes adaptent la puissance d'émission, lesdites commandes étant de préférence des commandes TPC.

5. Procédé selon l'une quelconque des revendications précédentes, **caractérisé en ce que** les commandes sont analysées, et pondérées dans une fenêtre de temps.

6. Procédé selon l'une quelconque des revendications précédentes, **caractérisé en ce que** la valeur de qualité mesure la qualité de la liaison montante et/ou de la liaison descendante.

7. Procédé selon l'une quelconque des revendications précédentes, **caractérisé en ce que** la perte est calculée à l'aide de la puissance d'émission (TX) et de la puissance de réception (RX) de la liaison descendante.

8. Procédé selon l'une quelconque des revendications précédentes, **caractérisé en ce que** l'on choisit comme paramètre de transmission supplémentaire la taille de bloc et/ou le codec et/ou un procédé de compression d'en-tête et/ou le retard de transmission.

9. Procédé selon l'une quelconque des revendications précédentes, **caractérisé en ce que** l'algorithme utilisé pour prévoir les qualités est un algorithme stochastique pluridimensionnel utilisant notamment les matrices de covariance, les réseaux neuronaux, les algorithmes génétiques et/ou l'annelage simulé.

10. Circuit électronique, **caractérisé par** les moyens permettant de mettre en oeuvre un procédé selon l'une quelconque des revendications de procédé précédentes.

11. Logiciel pour un appareil de communication mobile, notamment un téléphone mobile ou un assistant personnel (PDA),
**caractérisé en ce qu'**un procédé est implémenté selon l'une quelconque des revendications de procédé précédentes.

12. Support de données pour un appareil de communication mobile, notamment un téléphone mobile ou un assistant personnel, **caractérisé par** la mise en mémoire d'un logiciel selon la revendication de logiciel précédente.

13. Appareil de communication mobile, **caractérisé par** un dispositif permettant la mise en place d'un procédé selon l'une quelconque des revendications de procédé précédentes.
